# EUROPÄISCHE PATENTSCHRIFT

(11) **EP 2 565 444 B1**
(45) Veröffentlichungstag und Bekanntmachung des Hinweises auf die Patenterteilung: **27.02.2019**
(21) Anmeldenummer: 11007069.5
(22) Anmeldetag: 31.08.2011
(51) Int. Cl.: G01H 1/00, F03D 17/00

(54) **Verfahren und Vorrichtung zur Zustandsüberwachung von Rotorblättern**
Method and device for monitoring the status of rotor blades
Procédé et dispositif de surveillance d'état de pales de rotor

(43) Veröffentlichungstag der Anmeldung: 06.03.2013
(73) Patentinhaber: Wölfel Engineering GmbH + Co. KG, 97204 Höchberg (DE)
(72) Erfinder: Ebert, Carsten, 04463 Großpösna (DE); Kraemer, Peter, 57078 Siegen (DE); Pankoke, Steffen, 97837 Erlenbach (DE); Wölfel, Horst Peter, 97204 Höchberg (DE)
(74) Vertreter: Keil & Schaafhausen Patent- und Rechtsanwälte PartGmbB

(56) Entgegenhaltungen:
- WO-A1-2006/012827
- WO-A1-2011/029439
- WO-A2-2010/099928
- US-A1- 2010 209 247
- US-A1- 2011 135 474

## Beschreibung

Die Erfindung betrifft ein Verfahren zur Zustandsüberwachung von Rotorblättern von Windenergieanlagen, wobei Signale von mindestens einem Sensor ausgewertet werden, wobei mindestens eine Eigenfrequenz, modale Parameter und/oder mechanische und/oder akustische Eigenschaften auf Änderungen überwacht werden.

Ferner betrifft die Erfindung eine Vorrichtung zur Zustandsüberwachung von Rotorblättern von Windenergieanlagen, die einen Sensor und eine Recheneinheit aufweist und zur Durchführung dieses Verfahrens geeignet ist.

Windenergieanlagen weisen in der Regel mindestens ein, jedoch häufig mehrere Rotorblätter auf, die über eine Nabe an einer Gondel drehbar befestigt sind, die auf einem Turm angeordnet ist. Die Rotorblätter müssen dabei enormen Fliehkräften, wechselnden Windgeschwindigkeiten und Turbulenzen, Temperaturunterschieden und mechanischen Belastungen, wie beispielsweise Regen und Eisansatz, widerstehen. Bei der Auslegung von Rotorblättern rechnet man mit 1 Milliarde Lastwechseln innerhalb der angestrebten Lebensdauer von 20 Jahren. Damit gehören Rotorblätter zu den am stärksten belasteten technischen Komponenten überhaupt. Extrem hohe Beanspruchungen können beispielsweise aus starken Windanregungen, wie starken Böen, oder aber auch aus Resonanzerscheinungen herrühren.

Rotorblätter werden mit vorwiegend manuell geprägten Herstellungsverfahren produziert, wodurch Rotorblätter überdurchschnittlich häufig mangelhaft gefertigt sind. Beim späteren Betrieb an der Windenergieanlage resultieren aus solchen Fertigungsmängeln häufig sichtbare Defekte, die anwachsen und zu kapitalen Schäden führen können.

Der Austausch von Rotorblättern und häufige Reparaturen sind sehr kostenintensiv und verursachen große Ausfallzeiten. Rotorblätter erreichen zudem nur selten ihre auf 20 Jahre ausgelegte Lebensdauer.

Um Schäden frühzeitig erkennen und Warnungen ausgeben zu können, muss der aktuelle Zustand des Rotorblatts fortlaufend überwacht werden, beispielsweise mit Hilfe bekannter Überwachungssysteme (Monitoring-Systeme). Damit ist es möglich, rechtzeitig Gegenmaßnahmen wie beispielsweise Reparaturen vorzunehmen, bevor ein größerer Schaden entsteht. Insbesondere können so Totalverluste von Rotorblättern verringert werden, die einen Austausch des gesamten Rotorblatts erfordern und damit insbesondere bei Offshore-Windenergieanlagen sehr teuer sind.

Die Leistungsfähigkeit von Windenergieanlagen wird auch durch die Aerodynamik der Rotorblätter beeinflusst. Mechanische Einflüsse, wie beispielsweise ein Eisansatz oder Schmutz sowie Schäden an der Oberfläche des Rotorblatts, wie Risse oder Abplatzungen, beeinflussen die Profilgeometrie des Rotorblatts negativ. Derartige Einflüsse sollen ebenfalls bei einer Zustandsüberwachung von Rotorblättern erkannt werden.

WO 2010/099928 A2 beschreibt ein Verfahren zur Feststellung von Rotorblattschäden einer Windturbine. Dabei wird die Vibration von Rotorblättern mit Hilfe von Beschleunigungssensoren gemessen. Falls dann die Anzahl an starken Vibrationsereignissen einen vorbestimmten Schwellwert übersteigt, wird ein Fehlersignal ausgegeben.
In WO 2006/012827 A1 ist ein Verfahren und eine Vorrichtung zur Überwachung des Zustandes von Rotorblättern an Windkraftanlagen beschrieben, wobei an den Rotorblättern jeweils mindestens ein Bewegungssensor angeordnet ist, um Beschleunigungen bzw. Schwingungen des Rotorblattes zu erfassen. Dabei werden Schwingungsspektren der Rotorblätter bestimmt und mit Referenzspektren verglichen. Eine Verschiebung der typischen Frequenzen im Spektrum erfolgt dabei beispielsweise bei Änderungen der Materialeigenschaften, wie eine Änderung des Elastizitätsmoduls oder der Dichte, oder durch Schäden bzw. Veränderungen am Rotorblatt.
In GB 2 459 726 A wird vorgeschlagen, mittels Dehnungssensoren, die an Wurzeln der Rotorblätter angeordnet sind, Dehnungen und damit Belastungen des Rotorblatts zu erfassen.

In DE 10 2005 016 524 A1 wird vorgeschlagen, physikalische Größen, die im Zusammenhang mit der Masse eines oder mehrerer Rotorblätter stehen, zu überwachen, um auf ein Massenungleichgewicht zwischen den Rotorblättern schließen zu können. Als Kennzeichen für eine Blattmassenanomalie wird beispielsweise eine Verringerung der Eigenfrequenz gesehen.

Bei diesen Verfahren erfolgt eine spektrenbasierte Auswertung der gemessenen Schwingungen bzw. Beschleunigungen. Spektren werden üblicherweise über eine Fourier-Transformation berechnet. Dabei erfolgt ein Vergleich der aktuell ermittelten Spektren mit Referenzspektren, die am unbeschädigten Rotorblatt aufgenommen worden sind und in einem Speicher hinterlegt wurden.

Zur Sicherstellung einer hohen Sensitivität, also einer Detektion auch noch nicht kritischer Fehler, bei gleichzeitig hoher Zuverlässigkeit ist es wichtig, z.B. die Eigenfrequenzen sehr genau zu bestimmen. Sich gerade erst entwickelnde Schäden oder ein gerade erst beginnender Eisansatz führen nur zu einer sehr kleinen Verschiebung der Eigenfrequenz. Dementsprechend ist eine sehr hohe Frequenzauflösung erforderlich.

Bei der Berechnung von Spektren ist die Frequenzauflösung der Spektren gleich dem Kehrwert der Dauer einer einzelnen Messung. Wenn also beispielsweise eine Frequenzauflösung von 0,005 Hz gefordert ist, wird eine Messdauer von 200 s benötigt. Um belastbare Aussagen aus Spektren zu bekommen, ist eine mehrfache Wiederholung der Messungen erforderlich, wie dies auch in der WO 2006/012827 A1 erwähnt wird. Üblicherweise werden 10 bis 20 Messungen nacheinander durchgeführt und deren Einzelspektren gemittelt. Damit ergeben sich sehr lange Gesamtmessdauern von mehr als 30 min.

Problematisch ist dabei insbesondere, dass sich die Betriebsparameter der Anlage, wie z.B. die Drehzahl oder der Pitchwinkel, also der Anströmungswinkel der Rotorblätter, während der Gesamtmessdauer nicht verändern dürfen, um die Zuordnung des gemessenen Spektrums zum jeweiligen Betriebszustand nicht zu verfälschen. Die zuverlässige und genaue Erkennung von Änderungen von Eigenfrequenzen oder anderen modalen Parametern wird dadurch erschwert.

Ein anderes Problem besteht darin, dass aus einem gemessenen Spektrum nicht ohne weiteres erkannt werden kann, ob ein sich im Spektrum zeigender Peak von einer Eigenfrequenz des Rotorblatts stammt oder zu einer durch eine äußere Erregung erzwungenen Schwingung gehört. Dies erschwert die Erkennung von Zustandsveränderungen.

Der Erfindung liegt nun die Aufgabe zugrunde, die Zustandsüberwachung von Rotorblättern zu verbessern.

Diese Aufgabe wird bei einem Verfahren der eingangs genannten Art erfindungsgemäß dadurch gelöst, dass zur Überwachung und insbesondere zur Erkennung von Veränderungen der Rotorblatteigenschaften aus den gemessenen Schwingungen ein Zeitbereichssystemidentifikationsverfahren verwendet wird, wobei eine Temperatur eines oder mehrerer Rotorblätter erfasst wird.

Es wird also eine Systemidentifikation im Zeitbereich durchgeführt. Damit sind u.a. Eigenfrequenzverschiebungen und Veränderungen anderer modaler Eigenschaften der Rotorblätter, die auf Zustandsveränderungen hinweisen, wesentlich genauer und schneller detektierbar als über spektrenbasierte Methoden. Eigenfrequenzen und weitere modale Parameter können direkt und damit in deutlich kürzerer Messzeit ermittelt werden. Auch Fremderregungen können ohne weiteres erkannt und damit gefiltert werden. Dadurch ist es möglich, auch geringfügige Veränderungen wie beispielsweise einen beginnenden Eisansatz oder geringfügige Beschädigungen des Rotorblatts bereits zu erkennen, auch wenn dies nur zu einer sehr geringen Verschiebung beispielsweise der Eigenfrequenz führt. Da es dabei nicht erforderlich ist, dass die Betriebsparameter der Anlage über einen relativ langen Zeitraum konstant bleiben, ergibt sich eine zuverlässige Auswertung auch bei wechselnden Bedingungen. Außerdem wird eine Temperatur eines oder mehrerer Rotorblätter erfasst. Dabei kann beispielsweise die Temperatur der Struktur des Rotorblatts ermittelt werden. Temperaturänderungen können ebenfalls eine Verschiebung der Eigenfrequenzen bewirken. Damit dies nicht als fehlerhafter Zustand anerkannt wird, ist es günstig, die Temperatur des Rotorblatts zu kennen. Die Qualität der Überwachung lässt sich also durch Erfassen der Temperatur verbessern.

Als Zeitbereichssystemidentifikationsverfahren können beispielsweise folgende Systemidentifikations- und Fehlererkennungsverfahren einzeln oder in Kombination eingesetzt werden:
- Stochastic Subspace Identification
- Systemidentifikation mit autoregressiven Modellen
- Stability Plot
- Kalman-Filterung
- Auto- und Kreuzkorrelationsanalyse im Zeitbereich
- Lineare und nicht-lineare Hauptkomponentenanalyse

Bevorzugterweise werden Fehlerindikatoren abgeleitet, die insbesondere bei Überschreiten von Grenzwerten eine Warnmeldung auslösen. Die Fehlerindikatoren werden dabei aus den mit Hilfe des Zeitbereichssystemidentifikationsverfahrens ermittelten Daten abgeleitet und sind beispielsweise ein Maß für die Abweichung der aktuell bestimmten Eigenfrequenz von einer als Referenz hinterlegten Eigenfrequenz. Derartige Fehlerindikatoren stellen damit ein Maß für eine Änderung dar, das relativ einfach mit einem Grenzwert verglichen werden kann.

Vorzugsweise erfolgt eine betriebszustandsabhängige Klassifizierung mit statistischen Verfahren. Damit werden Einflüsse des Betriebsverhaltens von Änderungen des Zustands der Rotorblätter abgegrenzt. Fehlerhafte Zustandsveränderungen können dadurch von nicht fehlerhaften Zustandsveränderungen unterschieden werden.

Vorzugsweise wird als Sensor ein multiaxial messender Schwingungssensor verwendet, mit dem Beschleunigungen im Rotorblatt erfasst werden, beispielsweise ein biaxial oder triaxial messender Sensor. Dabei kann in jedem Rotorblatt mindestens ein derartiger Sensor angeordnet sein. Mit Hilfe eines derartigen multiaxial messenden Schwingungssensors können Schwingungen in verschiedenen Richtungen erfasst werden und deren Signale im Zeitbereichssystemidentifikationsverfahren verwertet werden. Dadurch ist eine sehr genaue Analyse des Eigenschwingungsverhaltens der Rotorblätter möglich, so dass Änderungen der Eigenfrequenzen, modaler Parameter und/oder mechanischer Eigenschaften zuverlässig erkannt werden können.

Vorzugsweise wird zum Erfassen von Schwingungen mindestens ein Schwingungssensor verwendet, der in einer Gondel und/oder in einem Turm der Windenergieanlage angeordnet ist, und dessen Signale insbesondere bei Stillstand der Windenergieanlage zur Überwachung von Eigenfrequenzen und/oder modalen Parametern und/oder mechanischen Eigenschaften der Rotorblätter verwendet werden. Durch die Anordnung des Sensors in der Gondel und/oder im Turm ist es möglich, die Eigenfrequenzen der Rotorblätter bei Stillstand der Windenergieanlage zu bestimmen. Dies ergibt sich aus Veränderungen in den Beschleunigungen der Gondel bzw. des Turmes. Dabei werden mit dem Sensor niederfrequente Strukturschwingungen erfasst und mit dem Zeitbereichssystemidentifikationsverfahren ausgewertet. Der Sensor sollte dabei einen hohen Signal-Rauschabstand aufweisen, also eine hohe Auflösung haben. Mit Hilfe dieses Sensors kann beispielsweise erkannt werden, ob sich ein vorher vorhandener Eisansatz am Rotorblatt zurückgebildet hat, da dies eine entsprechende Verschiebung der Eigenfrequenzen bewirkt.

Vorzugsweise wird als zusätzlicher Sensor ein Mikrofon verwendet, mit dem Luftschall im Inneren des Rotorblatts erfasst wird. Dabei können natürlich auch mehrere Mikrofone im Rotorblatt angeordnet sein und alle Rotorblätter Mikrofone aufweisen. Eine Veränderung des Luftschalls, der mit Hilfe des oder der Mikrofone gemessen wird, wird durch eine Veränderung der Aerodynamik des Rotorblatts hervorgerufen. Dabei reagieren die Aerodynamik und damit der Luftschall sehr empfindlich auf Veränderungen der äußeren Oberfläche des Rotorblattes. Die Veränderung der Aerodynamik und damit des Luftschalls kann beispielsweise durch Eisansatz, aber auch durch Oberflächenschäden, Risse, Abplatzungen und Schmutz hervorgerufen werden. Durch die Überwachung des Luftschalls können bereits kleinere Änderungen bemerkt werden.

Vorzugsweise werden Betriebs- und/oder Umweltdaten berücksichtigt. Durch Auswertung dieser Daten kann eine Plausibilitätsprüfung der durch das Zeitbereichssystemidentifikationsverfahren erreichten Kenntnisse erfolgen.

Die Betriebs- und/oder Umweltdaten können direkt aus einer Anlagensteuerung über eine Feldbusschnittstelle übernommen werden.

Vorzugsweise werden die gemessenen Werte mit Referenzzuständen verglichen. Gemessene Werte sind dabei beispielsweise Eigenfrequenzen, modale Parameter oder andere charakteristische Werte der oben genannten Verfahren. Der Vergleich mit einem oder mehreren Referenzzuständen dient dann zur Feststellung von Veränderungen. Die Referenzzustände können beispielsweise direkt nach Inbetriebnahme erfasst worden sein oder aber auch aus Modellberechnungen stammen.

Vorteilhafterweise werden die Daten aller Rotorblätter miteinander verglichen. Dadurch können beispielsweise Störungen, die von außen einwirken und auf alle Rotorblätter gleich wirken, herausgefiltert werden. Es erfolgt damit eine Plausibilitätskontrolle.

Vorzugsweise werden die Signale des oder der Sensoren über digitale Feldbusse, ein LAN-System oder ein WLAN-System übermittelt. Dabei kann zur Übermittlung der Signale zwischen der sich drehenden Nabe mit den Rotorblättern und dem stehenden System, das durch die Gondel und den Turm gebildet wird, beispielsweise der vorhandene Schleifring-Übertrager genutzt werden.

Die Aufgabe wird auch durch eine Vorrichtung mit den Merkmalen des Anspruchs 9 gelöst.

Die Signale des oder der Sensoren werden in der Recheneinheit dann nicht wie bekannt und üblich einer Fourier-Transformation unterzogen und daraus Spektren bestimmt, sondern es wird ein Zeitbereichssystemidentifikationsverfahren verwendet, wobei direkt auf die Zeitverlaufsdaten der Schwingungsbeschleunigungen zurückgegriffen wird. Dadurch ist eine hohe Genauigkeit sichergestellt, auch wenn nur geringe Messdauern möglich sind.

Dabei ist besonders bevorzugt, dass in mindestens einem Rotorblatt mindestens ein multiaxial messender Schwingungssensor angeordnet ist. Dabei können auch in jedem Rotorblatt ein oder mehrere multiaxial messende Schwingungssensoren angeordnet sein. Dadurch ist eine sichere Messung der Beschleunigungen in jedem Rotorblatt möglich. Veränderungen der Eigenfrequenzen oder anderer modaler Parameter können dadurch sicher erfasst werden.

Vorzugsweise ist der Schwingungssensor als MEMS-Sensor ausgebildet. Ein MEMS-Sensor (Micro Electro Mechanical System Sensor) ist ein Beschleunigungsaufnehmer, der als Chip ausgeführt ist. Der Schwingungssensor kann damit vollständig vorgefertigt werden und als Serienteil eingesetzt werden. Dabei ist ein relativ einfacher Austausch des Schwingungssensors im Falle eines Defekts möglich.

Vorteilhafterweise bildet der Schwingungssensor eine Baueinheit mit einem Temperatursensor, die insbesondere auf einer Platine zusammengefasst ist. Die Integration dieser Baueinheit in ein Rotorblatt ist relativ einfach möglich. Die zusätzliche Erfassung der Temperatur verbessert dabei das Ergebnis der Überwachung, da beispielsweise Temperaturänderungen erfasst werden können, die ebenfalls zu einer Veränderung der Eigenfrequenzen führen können.

Vorzugsweise ist der Sensor über optische Signal- und/oder Energieleitungen angeschlossen. Dies hat den

Vorteil, dass im Rotorblatt keine metallischen Leiter mit großer Ausdehnung parallel zum Blitzseil verlegt werden müssen. Damit wird ein Blitzschutz des Systems erreicht. Sowohl die Versorgung der Sensoren mit Betriebsenergie als auch ein Datentransfer kann optisch erfolgen. Dies stellt eine verlustarme Übertragungsmöglichkeit dar.

Vorzugsweise ist mindestens ein als Mikrofon ausgebildeter Sensor im Inneren mindestens eines Rotorblatts angeordnet. Dadurch können relativ einfach Oberflächenveränderungen, die eine Änderung der Aerodynamik des Rotorblatts bewirken, erkannt werden, da diese eine Veränderung des Luftschalls im Inneren des Rotorblatts bewirken. Die Signale des Mikrofons können dann ebenfalls mit einem Zeitbereichssystemidentifikationsverfahren ausgewertet werden, so dass eine hohe Empfindlichkeit gewährleistet ist. Oberflächenveränderungen umfassen dabei beispielsweise auch Verschmutzungen, Eisansatz und auftretende Beschädigungen an der Oberfläche des Rotorblatts, die ebenfalls eine Beeinflussung der Aerodynamik des Rotorblatts zur Folge haben.

Vorzugsweise ist in einer Gondel der Windenergieanlage ein Sensor zur Ermittlung der Eigenfrequenz, modaler Parameter und/oder mechanischer Eigenschaften eines Rotorblatts angeordnet. Mit Hilfe dieses Sensors, der beispielsweise als Schwingungs- oder Beschleunigungssensor ausgebildet ist, ist es möglich, Eigenfrequenzen des oder der Rotorblätter auch bei Stillstand der Windenergieanlage zu bestimmen. Dadurch ist es beispielsweise möglich, festzustellen, ob sich ein Eisansatz, der zum Stilllegen der Windenergieanlage geführt hat, wieder zurückgebildet hat. Stillstandszeiten werden damit minimiert.

Die Erfindung wird im Folgenden anhand bevorzugter Ausführungsbeispiele in Verbindung mit den Zeichnungen näher beschrieben. Hierin zeigen in schematischer Ansicht:
- Fig. 1: einen oberen Teil einer Windenergieanlage und
- Fig. 2: einzelne Komponenten zur Zustandsüberwachung von Rotorblättern.

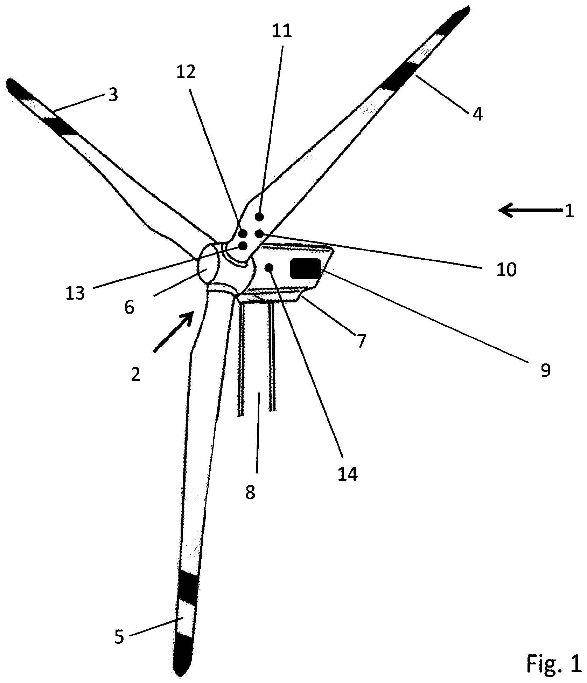

In Fig. 1 ist der obere Teil einer Windenergieanlage 1 dargestellt, die einen Rotor 2 mit drei Rotorblättern 3, 4, 5 aufweist. Die Rotorblätter 3, 4, 5 sind dabei an einer Nabe 6 befestigt, die drehbar an einer Gondel 7 der Windenergieanlage 1 angeordnet ist, die am oberen Ende eines Turms 8 angeordnet ist.

In der Gondel 7 und damit im stationären Teil der Windenergieanlage 1 ist eine Recheneinheit 9 angeordnet, die zur Datenerfassung und Auswertung von Signalen dient, die von verschiedenen Sensoren kommen.

Exemplarisch wird nur an einem Rotorblatt 4 gezeigt, welche Sensoren beispielsweise verwendet werden können. Die übrigen Rotorblätter 3, 5 können entsprechend mit Sensoren ausgerüstet sein.

Im Rotorblatt 4 ist ein Beschleunigungs- oder Schwingungssensor 10, ein Temperatursensor 11, ein Mikrofon 12 und ein Dehnungssensor 13 angeordnet. Der Dehnungssensor 13 befindet sich dabei im Bereich einer Wurzel des Rotorblatts 4, um die aufgrund von Biegebelastungen gerade in diesem Bereich auftretenden Belastungen erfassen zu können.

In der Gondel 7 ist ein weiterer Beschleunigungs- bzw. Schwingungssensor 14 angeordnet.

Die Auswertung der Sensorsignale erfolgt erfindungsgemäß mit einem Zeitbereichssystemidentifikationsverfahren, also direkt im Zeitbereich in der Recheneinheit 9. Eine vorherige Fourier-Transformation ist nicht erforderlich. Dabei werden keine Spektren miteinander verglichen, sondern es wird direkt auf Zeitverlaufsdaten oder auf daraus gebildete Korrelations- bzw. Kovarianzfunktionen zurückgegriffen. Damit sind Eigenfrequenzverschiebungen, Änderungen modaler Parameter und/oder mechanischer Eigenschaften wesentlich genauer detektierbar als über spektrenbasierte Methoden.

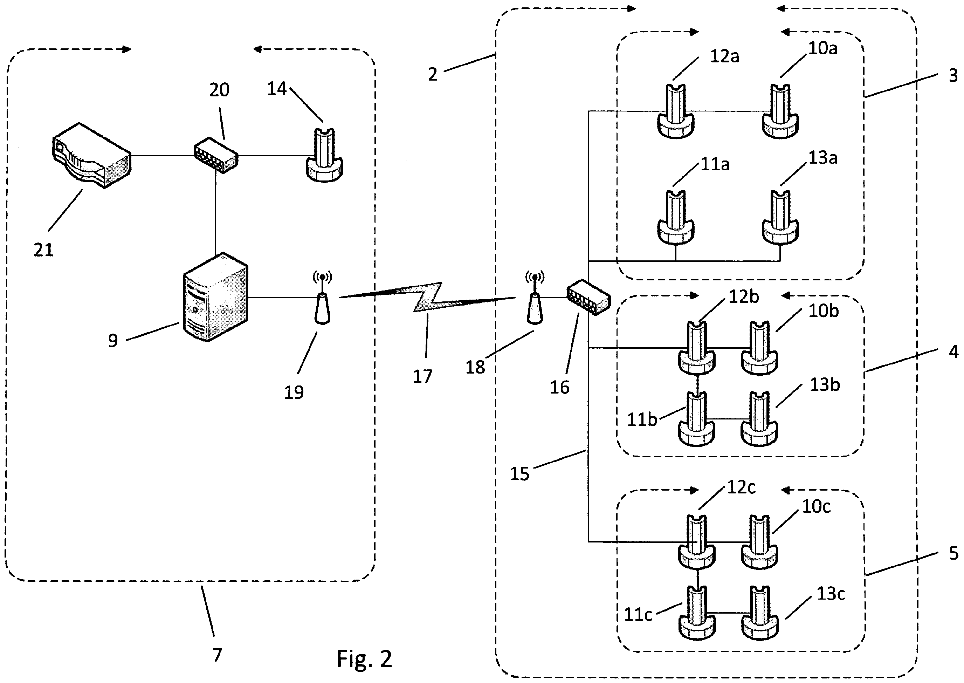

In Fig. 2 sind die einzelnen Komponenten zur Zustandsüberwachung von Rotorblättern dargestellt. Der Rotor 2 als drehendes System umfasst die Rotorblätter 3, 4, 5, die jeweils mit Schwingungssensoren 10a, 10b, 10c, Temperatursensoren 11a, 11b, 11c, Mikrofonen 12a, 12b, 12c und Dehnungssensoren 13a, 13b, 13c versehen sind. Die Sensoren 10, 11, 12, 13 sind über optische und/oder elektrische Leitungen 15 an einem Netzwerkknoten 16 angeschlossen. Von dort erfolgt die Signalübertragung beispielsweise über ein WLAN-System 17. Dafür ist der Netzwerkknoten 16 mit einem Sender 18 versehen.

Nicht dargestellt sind Leitungen zur Energieversorgung der Sensoren 10, 11, 12, 13, die ebenfalls als elektrische und/oder optische Leitungen ausgebildet sein können.

In der Gondel 7 oder dem Turm 8, also im stehenden System, ist ein Empfänger 19 vorgesehen, der mit der Recheneinheit 9 verbunden ist und die Signale der Sensoren 10, 11, 12, 13, die über den Sender 18 übersandt werden, empfängt und an die Recheneinheit 9 weiterleitet. In der Recheneinheit 9 erfolgt eine Datenerfassung aller Sensoren, von Betriebsdaten und von Umweltdaten. Dabei erfolgt auch die Auswertung dieser Daten, also die Anwendung eines Zeitbereichssystemidentifikationsverfahrens.

Zusätzlich ist der Schwingungssensor 14, der in der Gondel 7 untergebracht ist, über einen Netzwerkknoten 20 ebenfalls mit der Recheneinheit 9 verbunden. Über den Netzwerkknoten 20 ist auch eine Steuerung 21 der Windenergieanlage 1 mit der Recheneinheit 9 verbunden, so dass eine Informationsübertragung zwischen der Steuerung 21 und der Recheneinheit 9 erfolgen kann.

Durch die Auswertung der Signale und Ermittlung der Eigenfrequenzen, modaler Parameter und/oder mechanischer Eigenschaften mit einem Zeitbereichssystemidentifikationsverfahren können sehr geringe Abweichungen, beispielsweise kleine Eigenfrequenzverschiebungen, erkannt werden. Eigenfrequenzverschiebungen sind damit wesentlich genauer bestimmbar als über spektrenbasierte Methoden. Dabei werden zur Plausibilitätskontrolle zusätzlich aktuelle Betriebs- und Umweltdaten der Windenergieanlage mit erfasst und ausgewertet, um Einflüsse des Betriebsverhaltens auf die Eigenfrequenzverschiebung auszuschließen. Zusätzlich werden die Messsignale bzw. die extrahierten Ergebnisse mit statistischen Verfahren betriebszustandsabhängig klassifiziert.

Das Messen von Luftschall in mindestens einem Rotorblatt ermöglicht die zuverlässige Erkennung von Eisansatz, Verschmutzung und Oberflächenschäden. Da in der Regel alle Rotorblätter gleichen Bedingungen unterworfen sind, kann es aus Kostengründen als ausreichend angesehen werden, nur eines der Rotorblätter mit einem Mikrofon zur Messung des Luftschalls zu versehen. Allerdings funktioniert die Erfassung von Eisansatz mittels des Mikrofons nur bei sich bewegendem Rotor, da der mit Hilfe des Mikrofons erfassbare Luftschall von der Aerodynamik abhängig ist. Um beispielsweise Eisansatz auch bei stehendem Rotor erkennen zu können und damit ein automatisches Wiederanlaufen der Windenergieanlage zu gewährleisten, ist ein zusätzlicher Schwingungssensor in der Gondel angeordnet, wobei ebenfalls zur Überwachung ein Zeitbereichssystemidentifikationsverfahren verwendet wird. Damit ist es möglich, mit Hilfe dieses Sensors Eigenfrequenzen der stehenden Rotorblätter zu überwachen und daraus abzuleiten, ob ein Eisansatz vorliegt oder nicht.

Mit Hilfe eines biaxial messenden Schwingungssensors, der in den Rotorblättern angeordnet ist, können dabei Schwingungen des Rotorblatts bzw. Beschleunigungen erfasst werden und daraus sichere Aussagen über die Eigenfrequenz und modale Parameter getroffen werden. Es können auch andere multiaxial messende Sensoren verwendet werden, beispielsweise triaxial messende Sensoren. In einfachen Fällen reicht auch ein monoaxial messender Sensor aus.

Gegebenenfalls kann in den Rotorblättern eine Vorverarbeitung der Signale erfolgen. Es ist aber auch denkbar, die Signale als Rohdaten von den Rotorblättern zur Recheneinheit zu übertragen.

Erfindungsgemäß werden so ein Verfahren und eine Vorrichtung zur Überwachung von Rotorblättern von Windenergieanlagen erhalten, das/die eine sehr zuverlässige Fehlererkennung mit einer hohen Sensitivität ermöglicht.

## Patentansprüche

1. Verfahren zur Zustandsüberwachung von Rotorblättern von Windenergieanlagen, wobei Signale von mindestens einem Sensor ausgewertet werden, wobei mindestens eine Eigenfrequenz, modale Parameter und/oder mechanische Eigenschaften auf Änderungen überwacht werden, **dadurch gekennzeichnet, dass** zur Überwachung ein Zeitbereichssystemidentifikationsverfahren verwendet wird, wobei eine Temperatur eines oder mehrerer Rotorblätter (4) erfasst wird.

2. Verfahren nach Anspruch 1, **dadurch gekennzeichnet, dass** ein Fehlerindikator abgeleitet wird, der insbesondere bei Überschreiten eines Grenzwerts eine Warnmeldung auslöst.

3. Verfahren nach einem der Ansprüche 1 oder 2, **dadurch gekennzeichnet, dass** eine betriebszustandsabhängige Klassifizierung mit statistischen Verfahren erfolgt.

4. Verfahren nach einem der Ansprüche 1 bis 3, **dadurch gekennzeichnet, dass** als Sensor ein multiaxial messender Schwingungssensor (10) verwendet wird, mit dem Beschleunigungen im Rotorblatt (4) erfasst werden.

5. Verfahren nach einem der Ansprüche 1 bis 4, **dadurch gekennzeichnet, dass** zum Erfassen von Schwingungen als Sensor mindestens ein Schwingungssensor (10) verwendet wird, der in einer Gondel (7) und/oder in einem Turm (8) der Windenergieanlage (1) angeordnet ist, dessen Signale insbesondere bei Stillstand der Windenergieanlage (1) zur Überwachung von Eigenfrequenzen und/oder modalen Parametern und/oder mechanischen Eigenschaften der Rotorblätter (4) verwendet werden.

6. Verfahren nach einem der Ansprüche 1 bis 5, **dadurch gekennzeichnet, dass** als ein zusätzlicher Sensor mindestens ein Mikrofon (12) verwendet wird, mit dem Luftschall im Inneren des Rotorblatts (4) erfasst wird.

7. Verfahren nach einem der Ansprüche 1 bis 6, **dadurch gekennzeichnet, dass** die Messdaten aller Rotorblätter (4) miteinander verglichen werden.

8. Vorrichtung zur Zustandsüberwachung von Rotorblättern von Windenergieanlagen, die mindestens einen Sensor und eine Recheneinheit (9) aufweist, zur Durchführung des Verfahrens nach einem der Ansprüche 1 bis 7.

9. Vorrichtung nach Anspruch 8, **dadurch gekennzeichnet, dass** in mindestens einem Rotorblatt (3, 4, 5) mindestens ein multiaxial messender Schwingungssensor (10) angeordnet ist.

10. Vorrichtung nach Anspruch 9, **dadurch gekennzeichnet, dass** der Schwingungssensor (10) als MEMS-Sensor ausgebildet ist.

11. Vorrichtung nach Anspruch 9 oder 10, **dadurch gekennzeichnet, dass** der Schwingungssensor (10) eine Baueinheit mit einem Temperatursensor (11) bildet, die insbesondere auf einer Platine zusammengefasst ist.

12. Vorrichtung nach einem der Ansprüche 8 bis 11, **dadurch gekennzeichnet, dass** mindestens ein als Mikrofon (12) ausgebildeter Sensor im Inneren mindestens eines Rotorblatts (3, 4, 5) angeordnet ist.

13. Vorrichtung nach einem der Ansprüche 8 bis 12, **dadurch gekennzeichnet, dass** in einer Gondel (7) und/oder in einem Turm der Windenergieanlage (1) mindestens ein Sensor (14) zur Ermittlung der Eigenfrequenz, modalen Parameter und/oder mechanischen Eigenschaften eines Rotorblatts (3, 4, 5) angeordnet ist.

14. Vorrichtung nach einem der Ansprüche 8 bis 13, **dadurch gekennzeichnet, dass** der Sensor (10, 11, 12, 13) über optische Leitungen (15) zur Übertragung von Daten und/oder Energie angeschlossen ist.

## Claims

1. Method of monitoring the status of rotor blades of wind energy installations, wherein signals from at least one sensor are evaluated, wherein at least one natural frequency, modal parameters and/or mechanical properties are monitored for changes, **characterised in that** for monitoring a time-domain system identification method is used, wherein a temperature of one or more rotor blades (4) is recorded.

2. Method according to claim 1 **characterised in that** an error indicator is derived, which, in particular when a limit value is exceeded, triggers a warning.

3. Method according to any one of claims 1 or 2 **characterised in that** operating status-dependent classification takes place with statistical methods.

4. Method according to any one of claims 1 to 3 **characterised in that** as a sensor a multi-axially measuring vibration sensor (10) is used with which accelerations in the rotor blade (4) are recorded.

5. Method according to any one of claims 1 to 4 **characterised in that** to record vibrations at least one vibration sensor (10) is used as a sensor which is arranged in a gondola (7) and/or in a tower (8) of the wind energy installation (1), the signals of which when the wind energy installation (1) is at a standstill are used to monitor natural frequencies and/or modal parameters and/or mechanical properties of the rotor blades (4).

6. Method according to any one of claims 1 to 5 **characterised in that** as an additional sensor at least one microphone (12) is used, with which airborne sound in the interior of the rotor blade (4) is recorded.

7. Method according to any one of claims 1 to 6 **characterised in that** the measuring data of all rotor blades (4) are compared with each other.

8. Device for monitoring the status of rotor blades of wind energy installations which comprises at least one sensor and calculation unit (9) for implementing the method according to any one of claims 1 to 7.

9. Device according to claim 8 **characterised in that** arranged in at least one rotor blade (3, 4, 5) is at least one multi-axially measuring vibration sensor (10) .

10. Device according to claim 9 **characterised in that** the vibration sensor (10) is in the form of an MEMS sensor.

11. Device according to claim 9 or 10 **characterised in that** the vibration sensor (10) forms a structural component with a temperature sensor (11), which is, in particular, assembled on one board.

12. Device according to any one of claims 8 to 11 **characterised in that** at least one sensor configured as a microphone (12) is arranged inside at least one rotor blade (3, 4, 5).

13. Device according to any one of claims 8 to 12 **characterised in that** arranged in a gondola (7) and/or in a tower of the wind energy installation (1) is at least one sensor (14) for determining the natural frequency, modal parameters and/or mechanical properties of a rotor blade (3, 4, 5).

14. Device according to any one of claims 8 to 13 **characterised in that** the sensor (10, 11, 12, 13) is connected via optical conductors (15) for the transmission or data and/or energy.

## Revendications

1. Procédé de surveillance d'état de pales de rotor d'éoliennes, des signaux d'au moins un capteur étant exploités, au moins une fréquence propre, des paramètres modaux et/ou des propriétés mécaniques étant surveillés quant aux variations, **caractérisé en ce qu'**un procédé d'identification du système de plage de temps est utilisé pour la surveillance, une température d'une ou plusieurs pales de rotor (4) étant saisie.

2. Procédé selon la revendication 1, **caractérisé en ce qu'**un indicateur de défaut est dérivé qui déclenche un message d'avertissement notamment en cas de dépassement d'une valeur limite.

3. Procédé selon l'une quelconque des revendications 1 ou 2, **caractérisé en ce qu'**une classification en fonction de l'état de fonctionnement a lieu avec un procédé statistique.

4. Procédé selon l'une quelconque des revendications 1 à 3, **caractérisé en ce qu'**un capteur de vibrations à mesure multiaxiale (10) est utilisé comme capteur avec lequel les accélérations dans la pale de rotor (4) sont saisies.

5. Procédé selon l'une quelconque des revendications 1 à 4, **caractérisé en ce qu'**un capteur de vibrations (10) est utilisé comme capteur pour saisir des vibrations, lequel est disposé dans une nacelle (7) et/ou dans une tour (8) de l'éolienne (1), dont les signaux sont utilisés notamment en cas d'arrêt de l'éolienne (1) pour la surveillance des fréquences propres et/ou des paramètres modaux et/ou propriétés mécaniques des pales de rotor (4).

6. Procédé selon l'une quelconque des revendications 1 à 5, **caractérisé en ce qu'**au moins un microphone (12) est utilisé en tant que capteur supplémentaire avec lequel le bruit aérien est saisi à l'intérieur de la pale de rotor (4).

7. Procédé selon l'une quelconque des revendications 1 à 6, **caractérisé en ce que** les données de mesure de toutes les pales de rotor (4) sont comparées entre elles.

8. Dispositif pour la surveillance d'état de pales de rotor d'éoliennes, qui comporte au moins un capteur et une unité de calcul (9) pour l'exécution du procédé selon l'une quelconque des revendications 1 à 7.

9. Dispositif selon la revendication 8, **caractérisé en ce qu'**au moins un capteur de vibrations à mesure multiaxiale (10) est disposé dans au moins une pale de rotor (3, 4, 5).

10. Dispositif selon la revendication 9, **caractérisé en ce que** le capteur de vibrations (10) est constitué comme un capteur à système micro-électro-mécanique (MEM).

11. Dispositif selon la revendication 9 ou 10, **caractérisé en ce que** le capteur de vibrations (10) forme une unité modulaire avec un capteur de température (11), qui sont notamment assemblés sur une plaquette de circuits imprimés.

12. Dispositif selon l'une quelconque des revendications 8 à 11, **caractérisé en ce qu'**au moins un capteur constitué comme un microphone (12) est disposé à l'intérieur d'au moins une pale de rotor (3, 4, 5).

13. Dispositif selon l'une quelconque des revendications 8 à 12, **caractérisé en ce qu'**au moins un capteur (14) est disposé dans une nacelle (7) et/ou une tour de l'éolienne (1) pour déterminer la fréquence propre, les paramètres modaux et/ou les propriétés mécaniques d'une pale de robot (3, 4, 5).

14. Dispositif selon l'une quelconque des revendications 8 à 13, **caractérisé en ce que** le capteur (10, 11, 12) est raccordé par des lignes optiques (15) pour la transmission des données et/ou d'énergie.
